(19) **Europäisches Patentamt / European Patent Office / Office européen des brevets**

(11) **EP 1 350 084 B1**

(12) **EUROPEAN PATENT SPECIFICATION**

(45) Date of publication and mention of the grant of the patent:
**02.12.2009 Bulletin 2009/49**

(21) Application number: **01984905.8**

(22) Date of filing: **19.12.2001**

(51) Int Cl.:
*G01M 11/08* (2006.01)

(86) International application number:
**PCT/IB2001/002806**

(87) International publication number:
**WO 2002/052242 (04.07.2002 Gazette 2002/27)**

(54) **METHOD AND APPARATUS FOR CRACK AND FRACTURE DETECTION UTILIZING BRAGG GRATINGS**

VERFAHREN UND APPARAT ZUM ERFASSEN VON RISSEN UND BRUCHSTELLEN UNTER VERWENDUNG VON BRAGG-GITTERN

PROCEDE ET APPAREIL PERMETTANT DE DETECTER LES CRAQUELURES ET LES FRACTURES A L'AIDE DE RESEAUX DE BRAGG

(84) Designated Contracting States:
**AT BE CH CY DE DK ES FI FR GB GR IE IT LI LU MC NL PT SE TR**

(30) Priority: **22.12.2000 GB 0031646**

(43) Date of publication of application:
**08.10.2003 Bulletin 2003/41**

(73) Proprietor: **EUROPEAN COMMUNITY**
**1049 Brussels (BE)**

(72) Inventors:
• **KENNY, Robert, Patrick**
**I-21020 Riance (IT)**
• **WHELAN, Maurice, Patrick**
**I-21020 Angera/VA (IT)**

(74) Representative: **Office Freylinger**
**P.O. Box 48**
**8001 Strassen (LU)**

(56) References cited:
**US-A- 5 142 141    US-A- 5 723 857**

• **Y. OKABE ET AL.: "DETECTION OF TRANSVERSE CRACKS IN CFRP COMPOSITES USING EMBEDDED FIBER BRAGG GRATING SENSORS" SMART MATERIALS AND STRUCTURES., vol. 9, December 2000 (2000-12), pages 832-838, XP000977388 IOP PUBLISHING LTD., BRISTOL., GB ISSN: 0964-1726**
• **R.M. MEASURES ET AL.: "WAVELENGTH DEMODULATED BRAGG GRATING FIBER OPTIC SENSING SYSTEMS FOR ADDRESSING SMART STRUCTURE CRITICAL ISSUES" SMART MATERIALS AND STRUCTURES., vol. 1, no. 1, March 1992 (1992-03), pages 36-44, XP000399871 IOP PUBLISHING LTD., BRISTOL., GB ISSN: 0964-1726**

**Description**

The present invention relates to a method and apparatus for detecting cracks and/or fractures utilizing Bragg gratings, and in particular, although not exclusively, to methods and apparatus which can also determine the position of a crack or fracture along a length of the Bragg grating by detecting and measuring changes in the reflectance and/or transmittance characteristic(s) of the grating.

The problem of detecting and locating cracks or fractures (breaks) in materials, either during testing or in service, is well known.

Previous attempts at solving this problem have utilized optical fibres, attached to or embedded in the body of material or structure to be tested or monitored.

One previous attempted solution utilizing such optical fibres has employed a technique known as Optical Time Domain Reflectometry (OTDR). In general, this technique involves the sending of light pulses along the fibre. When the body cracks or fractures it also breaks the attached or embedded fibre, the break in the fibre forming a reflecting surface. This reflecting surface reflects the pulses back down the fibre. By measuring the time delay between sending the pulse and receiving the reflected pulse from the break, the position of the break can be calculated. This OTDR technique is widely used in the telecommunications industry for detecting breakages in communication fibres. A problem with it, however, is its poor resolution of the position of the break. This results from the practical difficulties of measuring the delay times, and from the difficulties also involved in trying to inject large amounts of power into short pulses. In small structures, for example, if the crack in the fibre occurs close to the pulse source, then the delay between sending and receiving the reflected pulse back may be too short to measure with any useful accuracy. Clearly, any attempt to use more sophisticated equipment to measure shorter and shorter time delays increases the complexity and cost of the method or apparatus.

Because of these limitations OTDR is usually applied to detecting cracks with moderate resolution in long lengths of optical communication fibres (which may typically span lengths of 1km or more) and to detecting the location of cracks, again with moderate resolution, in large structures such as dams and bridges.

One attempt to apply the OTDR technique to monitoring smaller structures has been to zig zag the fibre to increase the length of fibre affixed or embedded in the structure. Disadvantages of this technique are that the complexity and cost of the apparatus are increased, and also the large amount of fibre to be bonded to or embedded in the structure may compromise its mechanical properties (e.g. strength).

Another previous attempt at providing a method of crack detection using optical fibres has utilised interferometry. In effect, the fibre attached to or embedded in the structure can be used as one arm of an interferometer, with reflection being provided by an end of the fibre. When a crack occurs in the structure, the crack may be transmitted to the fibre and the resultant break in the fibre acts as a reflecting surface, so shortening the arm of the interferometer.

Thus, by using the inteferometric arrangement to detect changes in the length of the "arm" comprising the fibre, the position of the break in the fibre may be determined. A problem with the inteferometric technique, however, is that it requires the use of coherent light, and light with very long coherence length must be used if large changes (i.e. large shortenings) of the fibre are to be detected. Again, this adds to the complexity of the detection method and apparatus and the cost of its implementation. If light with short coherence length is used, then large changes in the length of the fibre "arm" of the interferometer cannot be detected.

US 5,723,857 describes a method for measuring structural defects of a structure comprising connecting optical fibres with Bragg gratings to the structure, monitoring a variation of light parameter using time domain measurement to locate the position of a crack along a fibre, and monitoring point strains by measuring a characteristic of light reflected from the Bragg grating. The presence of in-fibre Bragg gratings serves only to provide secondary information in relation to the state of mechanical strain at pre-selected points

Similarly, in "Detection of transverse cracks in CFRP composites using embedded fibre Bragg grating sensors" by Okabe et al. (2000), fibre Bragg grating sensors are used to detect transverse cracks by measuring strain distribution. This invention/technique is based on inferring the presence of transverse cracks in a composite by analysing the reflected spectrum from a Bragg grating. The presence of cracks results in a non-uniform strain field. Such non-uniform strain fields can however arise in a material or structure due to non-homogeneity or anisotropy of the material or structure itself in the vicinity of the grating, i.e. not necessarily caused by cracks.

It is an object of aspects of the present invention to provide a method and apparatus for detecting cracks and/or fractures,' or other forms of damage, in or to a body, which method or apparatus overcomes at least partially the problems associated with the previous methods and apparatus.

In particular, embodiments of the present invention aim to provide a simpler method of crack detection, and/or one which provides improved resolution of the position of a crack.

It will be appreciated that in the following description and claims, the term "crack" should be interpreted as encompassing cracks, fractures, breakages, or other forms of damage to a body where context permits.

According to a first aspect of the present invention there is provided a method of detecting a crack or fracture in a body, the method comprising the steps of:

affixing or embedding a Bragg grating to a surface of, or in the body respectively;

measuring a reflectance and/or transmittance characteristic of the Bragg grating;

transmitting(i.e. propagating)a crack or fracture in the body to the Bragg grating to break the Bragg grating into a first portion and a second portion;

detecting the occurrence of the breakage of the Bragg grating by detecting a resultant change in the reflectance and/or transmittance characteristic of the Bragg grating.

In certain embodiments, more than one characteristic may be measured and monitored. The characteristic or characteristics may include a reflectance or transmittance spectrum.

Bragg gratings are well known, and their reflectance and transmittance characteristics are well known and well understood.

A Bragg grating suitable for use in embodiments of the present invention typically comprises an optical waveguide structure. Along an optical path through the structure, the refractive index n is modulated in a periodic fashion. The regions of modified refractive index (i.e. the regions whose refractive index is different from the bulk refractive index of the optical path material) effectively form the grating "elements". Reflection of light incident to the grating is a result of constructive interference between beams reflected by successive elements.

Bragg gratings in the form of planar waveguide structures are known, and may be used in certain applications of the present invention.

Perhaps of wider application, however, are Bragg gratings in the form of fibre Bragg gratings, also known as in-fibre Bragg gratings. Fibre Bragg gratings (FBGs) are well known and comprise a length of optical fibre (typically monomode fibre) having a refractive index n which is modulated in a periodic fashion along the length. Various techniques are used to produce the modulation $\Delta n$, and the maximum value of $\Delta n/n$ is typically in the range $10^{-6}$ to $10^{-3}$. By way of analogy with conventional "line" gratings, the fibre Bragg grating can be thought of as as series of grating elements, each one being a region of modified refractive index, along an optical fibre. In reality, the "edges" of the grating elements are not precisely defined, and in a FBG having constant pitch the refractive index may simply vary in a sinusoidal manner along the fibre.

The term "Bragg grating reflector" may also be used to refer to Bragg gratings suitable for use in embodiments of the present invention.

The pitch of the Bragg grating is the separation between adjacent peaks or troughs in the variation of refractive index along the optical path (i.e. the pitch is the spacing of the grating "elements"). In the case of FBGs, the pitch is the spacing of the grating elements along the fibre's length.

The physical pitch $\Lambda$ (or period) of the grating is related to the Bragg wavelength $\lambda$ by equation (1) below, and hence an important quantity is the effective pitch of the grating, which is the product of the refractive index and the physical pitch, i.e. n.$\Lambda$.

Bragg gratings having substantially uniform effective pitch along their lengths are known. Also known are "chirped" Bragg gratings, in which the effective pitch varies along the length of the grating in some manner. If the bulk refractive index along the grating is substantially constant, then uniform or varying effective pitch can of course be achieved by simply providing uniform or varying physical pitch, respectively.

The review article "In-Fibre Bragg grating sensors", Yun-Yiang Rao, Meas. Sci. Technol. 8 (1997) 355-375 describes FBGs and their reflectance characteristics. Rao discloses that grating reflectivities can approach approximately 100% at a particular wavelength(s). Rao goes on to describe how, when a FBG is illuminated by a broad band light source, a set of beams reflected from a set of partially reflecting planes formed by the periodic - core index modulation interfere with each other. The interference between two beams is destructive unless the beams are in phase with each other. According to Bragg's law, constructive interference (and hence reflection) will occur if the beams have the wave-length $\lambda_B$, given by:

$$\lambda_B \;=\; 2n\Lambda \qquad\qquad\qquad\qquad (1)$$

where n is the effective core refractive index and $\Lambda$ is the physical pitch.

For a uniform (i.e. non-chirped) FBG, the reflectivity at the Bragg wavelength can be estimated using the equation:

$$R = \tanh^2 \Omega \qquad\qquad\qquad (2)$$

where

$$\Omega \propto (L/\lambda_B)\ (\Delta n/n) \qquad\qquad\qquad (3)$$

Thus, R is a function of grating length L and the index perturbation ($\Delta n/n$) (i.e. the degree to which the refractive index of the core is modulated).

For a uniform grating, Rao goes on to state that the full width half maximum (FWHM) bandwidth, $\Delta\lambda$, of the grating is known to be given approximately by:

$$\Delta\lambda \propto \lambda_B\ [(\Delta n/2n)^2 + (1/N)^2]^{\frac{1}{2}} \qquad\qquad (4)$$

where N is the number of grating planes (i.e. the number of grating elements). For uniform pitch, N is of course proportional to L, the grating length.

It will thus be appreciated that if a uniform FBG is broken at a position along its length such that incident light can no longer reach the "2nd" portion, the reflectance spectrum becomes broader and the magnitude (i.e. the peak height) of reflectance is reduced compared with the parameters of the unbroken grating. Thus, a breakage in the FBG (or other Bragg grating) may be detected simply by detecting a reduction in the reflectance of the grating at, or close to, the nominal Bragg wavelength. The magnitude of this reduction can also be used to estimate the position of the break, using, for example, the above equations.

A more sophisticated, and more accurate, approach, however, is to use both the peak magnitude and width of the reflectance spectrum to determine the position of the break.

Preferably, the reflectance and transmittance spectra of a grating are measured in embodiments of the invention, so that the transmission measurements can be used to normalise the reflectance signal. The reflectance signal's intensity is dependent on losses in the measurement apparatus, which may vary with time, and also the output intensity of e.g. light sources used, which again may vary. Thus, the normalisation procedure takes account of changing signal losses and source variations, and provides a better estimate of the absolute reflectance signal, for comparison before and after a fracture.

As mentioned above, chirped gratings are also known. These devices act as wavelength bandpass filters in which the pitch of the grating is varied along its length. A chirped grating reflects a range of wavelengths (i.e. reflects a number of different optical frequencies), effectively from different positions along its length. Consider a chirped grating whose pitch varied from $\Lambda$ at one end to $\Lambda$ at the other, so as to provide reflection of incident light in the wavelength range $\lambda_{B1}$ (= 2n $\Lambda_1$) to $\lambda_{B2}$ (= 2n $\Lambda_2$). If the grating is now broken at a position midway along its length, such that the "$\Lambda_2$" end is no longer accessible to incident light, then the pitch $\Lambda_3$ at the position of the break now determines the reduced reflection bandwidth, $\lambda_{B1}$- $\lambda_{B3}$, where $\lambda_{B3}$ = 2n$\Lambda_3$. Thus, measuring the reflectance bandwidth of a chirped grating before and after a breakage gives an indication of the position of the break. Advantageously, the grating may be be linearly chirped (i.e. the pitch varied as a linear function of position along the grating's length) such that, to a first approximation, the reflection bandwidth is simply proportional to the accessible length of the grating (i.e. the length before the break).

The above discussion has contemplated cracks or breakages of sufficient severity being transmitted to the Bragg grating such that transmission of light across the break in the grating is not possible. The method of the present invention may, however, also be used to detect less severe damage, for example cracks resulting in partial alignment of the grating "halves" (thus still permitting partial transmission across the break) or even near perfect alignment, with the crack simply providing an additional reflector (a broad band reflector) to the incident light.

Analytical techniques, typically implemented by a suitably programmed processor, are known which can determine numerous parameters of a grating from its reflectance and/or transmission characteristics (e.g. spectra). Suitable techniques are, for example described in "A Genetic Algorithm for the Inverse Problem in Synthesis of Fiber Gratings", J. Skaar and K.M. Risvik, Journal of Lightwave Technology, Vol. 16, No. 10, October 1988, pp 1928-1932. An example of the inverse problem addressed by the paper is the determination of a fiber grating (i.e. FBG) index modulation profile corresponding to a given reflection spectrum.

In certain embodiments of the present invention these techniques are used to detect and preferably determine the position of such "minor" cracks from the resultant change in the reflectance and/or transmission spectra of the grating.

To reiterate, the relationship between the reflectance and transmittance characteristics of Bragg gratings and their physical parameters are well understood.

It will be apparent from the foregoing description that by measuring the reflectance or transmittance characteristics (e.g. spectra) of the unbroken grating and then monitoring changes in those characteristics (e.g. measuring the reflectance or transmittance spectra at at later time, i.e. spectra of the "broken" grating)then the occurrence of a crack in the body may be detected.

The inventive method provides the advantage that the occurrence of a break may be detected using relatively simple apparatus at relatively low cost (e.g. a broad band light source such as an LED illuminating the grating, which may itself be manufactured at low cost, and an optical spectrum analyser) compared with previous techniques.

Furthermore, provided that the position of grating with respect to the body is known to a certain accuracy, then simply by detecting the change or changes to the grating reflectance/transmittance characteristics, the method detects the position of the crack to at least that accuracy. The technique does not require the measurement of extremely small time delays, or the use of long-coherence length light.

Thus, a crack may be detected by detecting a change in the reflectance spectrum of a grating as a result of its effective length being shortened.

One simple implementation of the inventive method is to monitor the magnitude of a signal reflected by a uniform grating (e.g. measure the peak reflectance, at the nominal Bragg wavelength). If the effective length of the grating is shortened, by a sufficiently large crack occurring (i.e. a crack resulting in complete misalignment of the two halves of the broken grating) then the magnitude of the reflected signal is seen to decrease.

Preferably, the method further comprises the step of determining from the resultant change in reflectance/ transmittance characteristics the position of the breakage of the Bragg grating reflector along its length. This positional information may, for example, be derived from a measured change in the magnitude of a signal reflected by the grating (e.g. a reduction in magnitude), and/or from a change in a width of the optical reflectance/transmittance spectrum (e.g. a broadening). In the case of a uniform grating, the width monitored may be the FWHM, and in the case of a chirped grating the width may be a reflectance bandwidth.

Preferably, the step of measuring comprises the step of measuring an optical reflectance spectrum of the unbroken grating, and the step of detecting a resultant change comprises the step of measuring an optical reflectance spectrum of the first portion. Comparison of these spectra can provide an indication of the occurrence of the break, and of its position.

Preferably the method further comprises the step of measuring an optical reflectance spectrum of the second portion. Comparison of this spectrum with the original reflectance spectrum of the unbroken grating provides another indication of the position of the break. The estimated positions of the break from the reflectance spectra of the first and second portions can be combined to provide a more accurate indication of the position of the break.

Advantageously, the step of detecting a resultant - change comprises the step of comparing respectively intensities and/or widths of the optical reflectance spectra.

The above equations can be used to estimate from these reflectance intensities and widths the lengths of the first and second portions relative to the unbroken grating.

Preferably, the step of determining the position of the breakage comprises the step of comparing respective intensities and/or widths of the optical reflectance spectra. Again the above equations can be used to determine the length of the first portion and/or the second portion with respect of the unbroken grating.

Preferably, the Bragg grating has substantially uniform pitch, and the step or steps of comparing each comprise the step of comparing intensities and/or widths of respective central peaks of the optical reflectance spectra.

The Bragg grating may be chirped, and the step or steps of comparing may each comprise the step of comparing respective bandwidths of the optical reflectance spectra.

Rather than directly comparing measured spectra, the method may comprise the steps of determining from the reflectance spectra, using analytical techniques, parameters of the unbroken and broken grating, the parameters including at least grating length and/or the number of reflecting planes, and where the step of detecting the occurrence of the breakage may comprise the step of comparing the determined parameters. Advantageously, the parameters may be used to determine the position of the breakage.

Advantageously, the step of measuring an optical reflectance and/or transmittance characteristic comprises the steps of supplying light to the Bragg grating from a broad band source, and detecting a reflectance or transmittance spectrum using an optical spectrum analyser.

Preferably the step of detecting the resultant change comprises the steps of using the broad band source and the optical spectrum analyser to measure a reflectance and/or transmittance spectrum of the broken grating.

Preferably, the step of measuring an optical and/or transmittance characteristic comprises the steps of supplying light to the Bragg grating from a tunable laser, controlling the laser to scan the wavelength of supplied light through a range, and detecting light reflected or transmitted by the unbroken grating using a broad band detector.

Preferably the step of detecting the resultant change comprises the steps of using the tunable laser and the broad band detector to measure a reflectance or transmittance spectrum of the broken grating.

There are other ways of measuring reflectance and/or transmittance spectra, which may advantageously be used in embodiments of the present invention. These include the use of a scanning filter arrangement which could comprise, for example, a scanning Fabry-Perot cavity or an Accousto-Optic Tunable filter (AOTS). edge - filter based techniques may also be used.

Preferably, the method utilises a fibre Bragg grating.

The FBG may comprise glass fibre. Advantageously, the grating may be formed in a plastic fibre. Such plastic fibres facilitate processing/treatment to controllably alter grating parameters/characteristics.

Preferably, the method further comprises the step of coating the fibre Bragg grating to improve transmission of the crack or breakage to the grating. Thus, the reflector may be coated to improve its - bonding to the body to be monitored.

Preferably, the Bragg grating reflector may be embrittled so that it does not reinforce the body. Embrittling may also be desirable to ensure that the grating cracks in response to a crack in the adjacent portion of the body.

Advantageously, the grating may be processed/treated in other ways to optimise its properties in relation to those of the body (e.g. equal strength, better bonding, better transverse crack transmission).

According to a second aspect of the present invention there is provided apparatus for detecting a crack or breakage in a body, the apparatus comprising:

a Bragg grating for affixing to a surface of, or for embedding in, the body;
a light source and a light detector for measuring a reflectance and/or a transmittance spectrum of the Bragg grating;
a processor arranged to detect a breakage along the length of the Bragg grating by detecting a change in the reflectance and/or transmittance spectrum.

The "light source" supplies electromagnetic radiation to the grating. This radiation is not necessarily in the visible spectrum, it may be in other regions of the optical spectrum, or may be outside the optical spectrum altogether (e.g. it may be a microwave source).

Preferably, the processor is further arranged to determine the position of the breakage along the grating's length from measurements of the reflectance and/or transmittance spectra before and after the breakage.

Conveniently, the light source may comprise a broad band source (e.g. an LED) and the detector may comprise an optical spectrum analyser.

Alternatively, the light source may comprise a tunable laser, and the detector may comprise a broad band detector (e.g. a photo diode).

Preferably the Bragg grating is a fibre Bragg grating.

Preferably the fibre Bragg grating is coated to facilitate bonding to the body (and so improve the transmission of a crack in the body to the grating) and/or the grating is preferably embrittled.

According to a third aspect of the present invention there is provided a body in combination with apparatus as defined above, wherein the Bragg grating is attached to a surface of, or is embedded in the body.

Embodiments of the present invention will now be described with reference to the accompanying drawings, in which:

Fig. 1 is a schematic diagram of a body in combination with crack detection apparatus in accordance with an embodiment of the present invention;

Fig. 2 is a schematic diagram of the reflectance spectrum of the unbroken Bragg grating of Fig. 1 (i.e. before the crack occurred);

Fig. 3 is a schematic representation of the reflectance spectrum of the grating of Fig. 1 after the crack, measured from the light input direction;

Fig. 4 is a schematic representation of the reflectance spectrum or bandwidth of a chirped fibre Bragg grating before and after a crack occurs somewhere along its length;

Fig. 5 is a schematic diagram of a series of fibre Bragg gratings of different nominal Bragg wavelengths bonded to the surface of a body B;

Fig. 6 is a schematic diagram of a body in combination with a crack detection apparatus in accordance with a further embodiment, before the crack occurs;

Fig. 7 is a schematic diagram of the body and apparatus of Fig. 6, but after the crack has occurred; and
Fig. 8 is a schematic diagram of a body in combination with crack detection apparatus in accordance with yet another embodiment of the present invention.

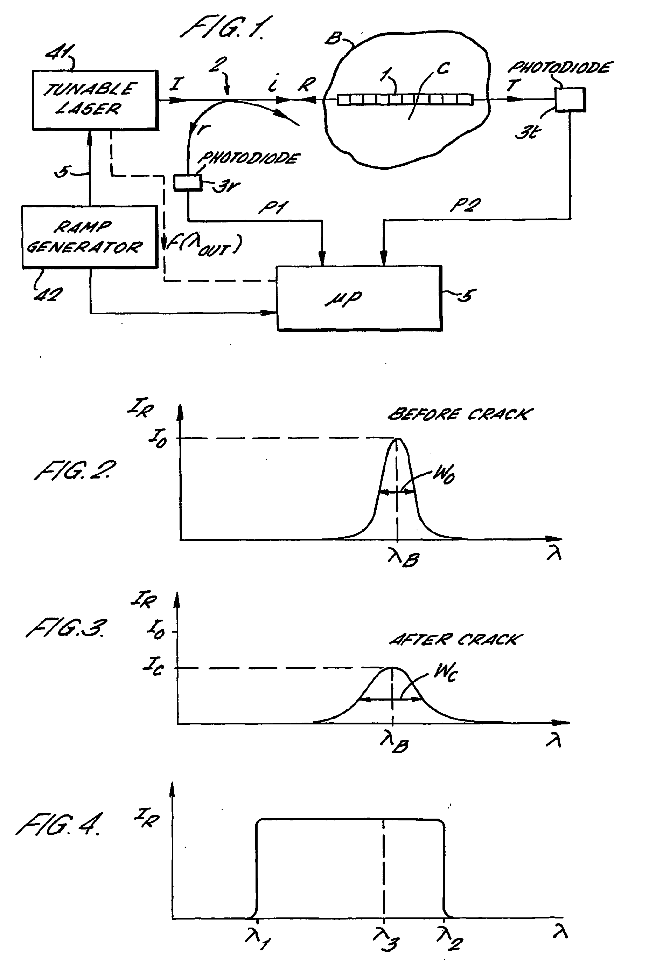

Referring now to Fig. 1, in a first embodiment of the present invention a fibre Bragg grating 1 is embedded in a body B. Such a body may be referred to as a smart structure as it incorporates the grating for self-diagnostic purposes. The fibre Bragg grating 1 is supplied with incident light i from a tunable laser which outputs a light signal I to the grating via a fibre optic coupler 2. The tunable laser outputs light in a narrow wavelength band, and the tunable laser receives a control signal S from a ramp generator 42 which then scans the output wavelength of the laser over (i.e. through) a given range. An output signal from the ramp generator is also fed to a microprocessor 5 so that the output wavelength of the output wavelength of the tunable laser at any given moment may be monitored. In alternative embodiments, the tunable laser itself may provide a signal f ($\lambda$out) to the microprocessor for this monitoring purpose.

When the grating 1 is intact, it interacts with the supplied light to provide a reflected signal R and also allows a transmitted signal T to pass through it. The transmitted signal T is fed to a broad band light detector, which in this embodiment is a photodiode $3_t$. The photodiode is arranged to provide an output signal P2 which is proportional to the intensity of the light incident to the photodiode at any given time. This signal P2 is supplied to the microprocessor 5. The reflected signal R returns to the coupler 2 and a portion of it, r, is supplied to a second photodiode $3_r$ which outputs a monitoring signal P1 to the microprocessor.

Before a crack occurs in the grating, the reflectance spectrum of the grating (i.e. the plot of the intensity of the reflected signal r incident to the photodiode $3_r$ as a function of wavelength as the tunable wavelength scans through its range) is as shown in Fig. 2. Depending on the precise nature of the grating, there may be further features on the real spectrum, such as side lobes, but for simplicity Fig. 2 just shows a central reflectance peak, centred on the nominal Bragg wavelength $\lambda_B$ of the Bragg grating (which in this case is uniform, i.e. non-chirped). In practice, the Bragg grating will typically be apodised. This is a well known technique and may be used to reduce (suppress) or enhance sidelobes as desired. The peak intensity $I_0$ may be in the region of 100% if the grating is sufficiently long and the modulation depth of the refractive index is great enough. This central peak has a full width half maximum (FWHM) of $W_0$.

When a crack C occurs in the body B and is transmitted to the grating, the grating reflection and transmission properties change accordingly. The apparatus of Fig. 1 is thus arranged to measure the reflectance and transmittance properties of the grating repeatedly, so that it may detect any such changes and so determine that a crack has occurred. In certain embodiments the processor stores measured spectra from a first time interval and compares them with spectra measured in later time intervals. We shall now consider the case where the crack C is sufficiently large to prevent transmission of light through the grating, i.e. light supplied from the tunable laser is unable to reach the photodiode $3_t$.

In this case, there will still be a reflected signal from the grating, but that reflection will only be provided by the portion of the grating before the crack C. This portion is of course shorter than the full length of the original grating, and so the reflectance spectrum after the crack exhibits a lower peak intensity, and an increased width. A schematic diagram of the reflectance spectrum of this first portion of grating (i.e. of the grating after the crack has occurred) is shown in Fig. 3. The peak intensity has reduced from $I_0$ to $I_c$, and whilst the central peak is still centred on the nominal Bragg wavelength $\lambda_B$ of the grating, the full width at half maximum W has increased from $W_0$ to $W_c$. In the embodiment shown in Fig. 1, the microprocessor is arranged to determine the respective lengths of the unbroken grating and the first portion of grating at the crack, from the measurement reflectance spectra using equations (2), (3) and (4) above. Thus, not only can the microprocessor detect the fact that a crack has occurred, it can also determine the position of the crack along the gratings length by comparing the relative lengths of the first portion and intact grating. In this embodiment, the grating 1 is accurately positioned initially with respect to the body B, and so the microprocessor can provide an accurate indication of the position of the crack within the body.

Although the above embodiment used a uniform fibre Bragg grating, alternative embodiments may use chirped gratings. As discussed above, when a severe crack occurs in a chirped grating, its reflectance bandwidth will in general be reduced. The general form of apparatus shown in Fig. 1 may be used to monitor the reflectance characteristics of a chirped grating embedded in the body B. Fig. 4 shows as a solid line the approximate form of a reflectance spectrum for an intact chirped grating, reflecting light in a bandwidth from $\lambda_1$ to $\lambda_2$. The broken line in Fig. 4 shows the resultant reduction in reflectance bandwidth of the chirped grating resulting from a severe crack occurring somewhere along its length. The broken grating now reflects light in a reduced bandwidth from $\lambda_1$ from $\lambda_3$.

Turning now to Fig. 5, in a further embodiment of the present invention a series of Bragg gratings 1a, 1b, and 1c are bonded to a body B using suitable means, for example by epoxy resin e. Each grating has uniform pitch, but the series of gratings have different pitches, and so provide spectral reflections centred on different Bragg wavelengths. By detecting any changes in the reflectance spectra of the series of gratings, the occurrence of cracks in different regions of the body (which regions may be substantial distances apart) may be detected. Furthermore, by looking at the magnitudes of the changes in the respective reflectance spectra information can be provided as to the precise location of the cracks within those regions.

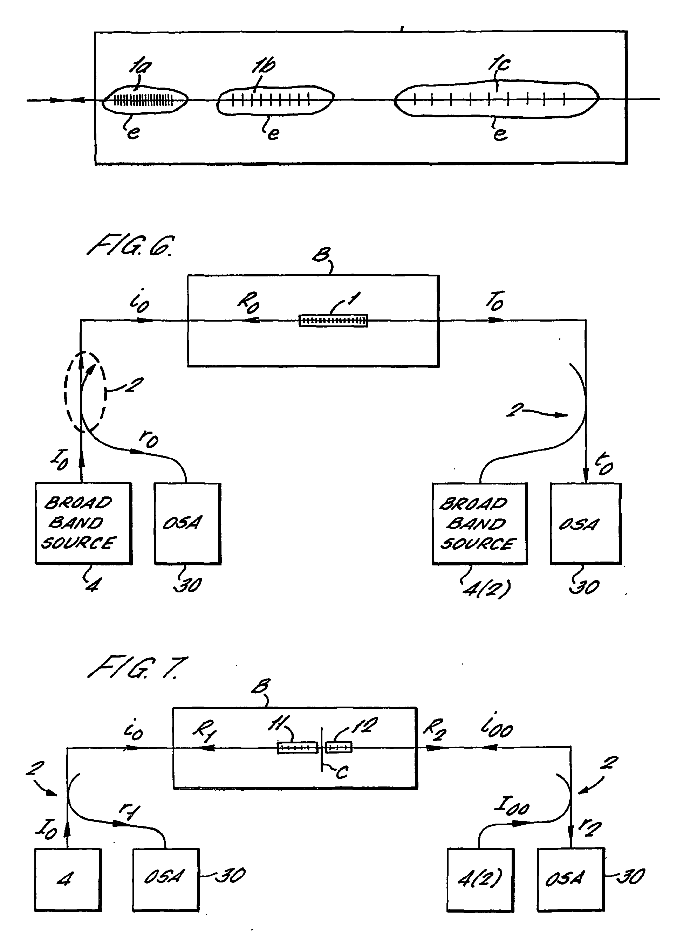

Turning now to Fig. 6, in a further embodiment of the present invention a Bragg grating reflector 1 is embedded in a body B. In this figure, the grating is shown unbroken. Light is supplied to the grating from a broad band source 4 via coupler 2. In this embodiment, while the grating is unbroken the second broad band source 4(2) on the nominal "transmission" side of the grating is switched off, or isolated in some other way so that it does not provide light to the grating in the reverse direction (which would of course prevent measurement of the signal $R_0$). Thus, a broad band light signal $i_0$ is incident to the grating 1. A portion of this light signal is reflected, as a reflectance signal $R_0$. This reflected light returns to the coupler, which diverts a portion $r_0$ to an optical spectrum analyser (OSA) 30. Thus the combination of the broad band source (which may be an LED) 4 and the OSA 30 may be reflectance spectrum of the grating 1. A portion of the light supplied to the grating is transmitted through it, forming a transmitted signal $T_0$ a portion of this signal is fed to a further OSA 30 to measure a transmittance spectrum of the grating.

The transmission measurements are used to normalise the measurements of the reflectance signal i.e. to provide a better measure of any changes in the magnitude of the reflected signal resulting from cracking of the grating (rather than those resulting from changes in loss mechanisms of the output intensity of the broad band source).

Fig. 7 shows schematically the apparatus of Fig. 6 but after a severe crack C has occurred in the body B, breaking the grating into a first portion 11 and a second portion 12. The crack is sufficiently severe to prevent transmission of light from the first to the second portion. Now, the broad band source 4 and OSA 30 at the nominal input side of the grating are used to measure the reflectance spectrum of the first portion 11. As the crack prevents transmission of light from the first to the second portion, a second broad band source 4(2) at the nominal output side of the grating is now used to send a further light signal $I_{00}$ back to the second portion 12 of the grating. This light signal is supplied via a further coupler 2 and so the signal received by the second portion 12 is $i_{00}$. In this example it is the severity of the crack C which enables the individual reflectance spectra of the two halves of the grating to be measured. The second portion 12 provides a reflected signal $R_2$, a portion of which $r_2$ is now fed to the OSA 30 at the nominal output side.

Thus, in this embodiment the normalised reflectance spectrum measurement of the unbroken grating is used to detect the occurrence of a crack. Once the crack has occurred, the second broad band source 4(2) is used (by employing suitable switching) to illuminate the grating from the other end, so that the reflectance spectra of both "halves" can be used to determine the position of the crack to greater accuracy.

In this embodiment, the reflectance spectra of the unbroken and first portion of the grating measured by the OSA on the input side are compared to give an indication of the position of the crack C along the gratings length, and in addition the transmission spectrum of the in tact grating is compared with the reflectance spectrum of the second portion 12 to provide a further indication of the position of the crack C. By using these measurements from opposite ends of the grating, the position of the crack C may be determined with improved accuracy.

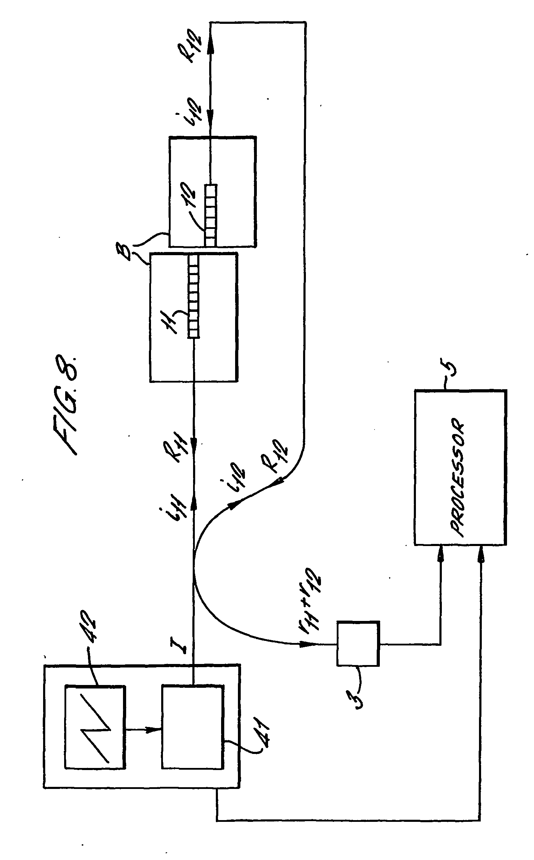

Turning now to Fig. 8, this shows a further embodiment of the present invention which comprises a body B in which a fibre Bragg grating has been embedded. A dislocation has occurred in the body such that the Bragg grating has been split into first and second portions 11, and 12 with no possibility of light transmission between them. The ends of the first and second portions are connected to a common fibre optic coupler 2. An input to the coupler is supplied with light I from a tunable laser 41 controlled by a ramp generator 42. An output from the coupler 2 is supplied to a broad band light detector 3, which in turn provides a corresponding output signal to a processor 5. Before the dislocation occurred, and the grating was intact, the signal provided to the processor 5 from the broad band light detector 3 was substantially uniform over the entire scan range of the tunable laser. This was because the broad band detector was being supplied with both the reflected and transmitted spectra from the grating as a result of the "looped" arrangement.

When the dislocation occurs, however, there is no transmitted signal, either from the first portion to the second portion or the other way round. In this event, the signal received by the broad band detector 3 is a combination of the reflectance spectra of the first portion 11 and second portion 12 (i.e. it corresponds to $r_{11}$ plus $r_{12}$). The processor receives a signal from the light source, which comprises the ramp generator 42 and tunable laser 41), this signal being indicative of the output frequency of the tunable laser at any given time. Thus, the processor is able to measure, by means of the light source and light detector, the combined reflectance spectra of the first and second portions. The processor is suitably programmed so that from the combined reflectance spectra it can determine the occurrence and position of the dislocation along the length of the grating.

A further embodiment of the present invention utilises the spectral reflectance properties of an in-fibre Bragg grating to locate the position of a fibre breakage embedded in a specimen. In a first time interval a reflectance spectrum of the grating is measured. A distortion of the body then occurs which breaks the fibre within the grating region. There are now effectively two Bragg gratings, in general each of a different length. In this embodiment the reflected spectra of one of these gratings is measured in reflection. In a further embodiment, both the reflected spectra of both of the gratings are measured. Each of the spectra of the two "halves" of the grating have a different form from that of the unbroken grating. Typically, the spectra of the shorter portions are broader, and have a lower peak reflectivity (because the gratings are shorter than the original unbroken grating). In this embodiment, analysis of one of the spectra is performed and provides information to calculate with a certain precision the position of the fibre break. In an alternative embodiment, both spectra are measured and analysed, and provide redundant information and hence reduce uncertainties in the location of the crack.

It will be apparent that advantages of embodiments of the invention include the fact that the location of the crack is determined within the grating length, which, assuming accurate initial location of the grating, is potentially more accurate than measurements over the length of the fibre needed by OTDR for example.

Computer models exist which enable the inverse problem of the determination of grating parameters from measured spectra to be solved. Such computer models may be used in embodiments of the present invention (as referenced above).

It will be apparent that the described methods and measurement apparatus may find particular application in the aerospace industry (for example for the monitoring of aero engines and/or composite structures) in mechanical engineering, in materials testing, and civil engineering (e.g. crack monitoring in concrete dams). Other applications will of course be possible.

With regard to the broad band sources mentioned in the previous description, it will apparent that LEDs may be used, and that other forms of broad band source may be equally applicable. Optical spectrum analysers suitable for measuring reflectance and/or transmittance spectra are commercially available, and are typically based on defraction gratings for the purpose of measuring spectral characteristics of sources and/or other optical components. The typical resolution of an optical spectrum analyser is approximately 0.05nm. Using a tunable laser controlled by a ramp generator, however, gives improved resolution. Spectra may also be measured using scanning filter arrangements and edge-filter techniques.

Although the description and claims may refer to "optical" signals, characteristics and spectra, it will be apparent that other wavelength signals may be used, which may not fall within the wavelength or frequency ranges usually attributed to optical signals. In other words, it is possible to use Bragg gratings (e.g. reflectors) whose Bragg wavelengths fall outside the visible and/or optical spectra, provided of course that suitable electromagnetic radiation sources and detectors are used to measure the reflectance and/or transmittance characteristics. For example, gratings reflecting in the microwave region may be used.

When measurements of the characteristics of two halves of a broken grating are used to determine the position of the crack or break, one approach is simply to average the results.

The couplers suitable for use in the above described embodiments may be termed 2 x 2 couplers.

It will be appreciated that in order to provide reliable crack detection it is important that the Bragg grating is suitably bonded or otherwise affixed or embedded in the specimen. Coatings may be applied to the grating for this purpose. It is undesirable for cracks to propagate along the length of the grating or along the interface between the grating and the body material.

The Bragg grating reflectors may be treated in some way so that, for example, their mechanical properties substantially match that of the body in which they are to be embedded. In addition, or alternatively, the reflectors may be embrittled so that they do not reinforce the body to be monitored.

**Claims**

1.  A method of detecting a crack or fracture in a body, the method comprising the steps of:

    affixing or embedding a Bragg grating (1) to a surface of, or in the body (B) respectively;
    measuring a reflectance and/or transmittance characteristic of the Bragg grating (1);

    **characterised by**
    transmitting a crack (C) or fracture in the body (B) to the Bragg grating (1) to break the Bragg grating (1) into a first portion and a second portion; and
    detecting the occurrence of the breakage of the Bragg grating (1) by detecting a resultant change in the reflectance and/or transmittance characteristic of the Bragg grating (1).

2.  A method in accordance with claim 1, further comprising the step of determining from said resultant change the position of the breakage of the Bragg grating (1) along its length.

3.  A method in accordance with claim 1 or claim 2 wherein said step of measuring comprises the step of measuring an optical reflectance spectrum of the unbroken grating, and said step of detecting a resultant change comprises the step of measuring an optical reflectance spectrum of the first portion.

4.  A method in accordance with claim 3, further comprising the step of measuring an optical reflectance spectrum of the second portion.

**5.** A method in accordance with claim 3 or claim 4 wherein said step of detecting a resultant change comprises the step of comparing respective peak intensities and/or widths of the optical reflectance spectra.

**6.** A method in accordance with any one of claims 3 to 5, wherein the step of determining the position of the breakage comprises the step of comparing respective peak intensities and/or widths of the optical reflectance spectra.

**7.** A method in accordance with claim 5 or claim 6 wherein the Bragg grating (1) has substantially uniform effective pitch, and the step or steps of comparing each comprise the step of comparing peak intensities ($I_0$) and/or widths of respective central peaks of the optical reflectance spectra.

**8.** A method in accordance with claim 5 or claim 6 wherein the Bragg grating (1) is chirped, and the step or steps of comparing each comprise the step of comparing respective bandwidths of the optical reflectance spectra.

**9.** A method in accordance with claim 3 or claim 4 further comprising the steps of determining from the reflectance spectra, using analytical techniques, at least one parameter of the unbroken and broken grating, the at least one parameter including grating length and/or the number of reflecting planes,
wherein the step of detecting the occurrence of the breakage comprises the step of comparing said determined parameter or parameters.

**10.** A method in accordance with claim 9 wherein said step of determining the position of the breakage comprises the step of comparing said determined parameter or parameters.

**11.** A method in accordance with any preceding claim, wherein said step of measuring a reflectance and/or transmittance characteristic comprises the steps of supplying light to the Bragg grating from a broad band source and detecting a reflectance or transmittance spectrum using an optical spectrum analyser.

**12.** A method in accordance with claim 11 wherein the step of detecting the resultant change comprises the steps of using the broad band source and the optical spectrum analyser to measure a reflectance or transmittance spectrum of the broken grating.

**13.** A method in accordance with any one of claims 1 to 10, wherein the step of measuring a reflectance and/or transmittance characteristic comprises the steps of:

supplying light to the Bragg grating (1) from a tunable laser;
controlling the laser to scan the wavelength of supplied light over a range;
detecting light reflected or transmitted by the unbroken grating using a broad band detector.

**14.** A method in accordance with claim 13 wherein the step of detecting the resultant change comprises the steps of using the tunable laser and the broad band detector to measure a reflectance or transmittance spectrum of the broken grating.

**15.** A method in accordance with any preceding claim, wherein the Bragg grating (1) is a fibre Bragg grating.

**16.** A method in accordance with claim 15, further comprising the step of coating the fibre Bragg grating to improve transmission of the crack or fracture to the grating.

**17.** A method in accordance with claim 15 or claim 16, further comprising the step of embrittling the fibre Bragg grating.

**18.** Apparatus for detecting a crack (C) or fracture in a body (B), the apparatus comprising:

a Bragg grating (1) for affixing to a surface of, or for embedding in, the body (B);
a light source and a light detector for measuring a reflectance and/or a transmittance spectrum of the Bragg grating (1);

**characterised by**
a processor (5) arranged to detect a breakage along the length of the Bragg grating reflector by detecting a change in the reflectance and/or transmittance spectrum.

**19.** Apparatus in accordance with claim 18 wherein the processor (5) is further arranged to determine the position of the breakage along the Bragg grating's length from measurements of the reflectance and/or transmittance spectra before and after the breakage.

**20.** Apparatus in accordance with claim 18 or claim 19 wherein the light source comprises a broad band source and the detector comprises an optical spectrum analyser.

**21.** Apparatus in accordance with claim 18 or claim 19 wherein the light source comprises a tunable laser, and the detector comprises a broad band detector.

**22.** Apparatus in accordance with any one of claims 18 to 21 wherein the Bragg grating is a fibre Bragg grating.

**23.** Apparatus in accordance with claim 22 wherein the fibre Bragg grating is coated to facilitate bonding to the body.

**24.** Apparatus in accordance with claim 22 or claim 23 wherein the fibre Bragg grating is embrittled.


**Patentansprüche**

**1.** Verfahren zum Erfassen eines Risses oder einer Bruchstelle in einem Körper, wobei das Verfahren folgende Schritte umfasst:

Anbringen oder Einbetten eines Bragg-Gitters (1) an einer Oberfläche des Körpers (B) bzw. im Körper (B);
Messen einer Reflexions- und/oder Transmissionseigenschaft des Bragg-Gitters (1);
**gekennzeichnet durch**
Übertragen eines Risses (C) oder einer Bruchstelle im Körper (B) zu dem Bragg-Gitter (1), um das Bragg-Gitter (1) in einen ersten Abschnitt und einen zweiten Abschnitt zu brechen; und
Erfassen des Auftretens des Bruchs des Bragg-Gitters (1) **durch** Erfassen einer resultierenden Änderung der Reflexions- und/oder Transmissionseigenschaft des Bragg-Gitters (1).

**2.** Verfahren nach Anspruch 1, ferner umfassend den Schritt des Bestimmens der Position des Bruchs des Bragg-Gitters (1) entlang dessen Länge mittels der resultierenden Änderung.

**3.** Verfahren nach Anspruch 1 oder Anspruch 2, wobei der Schritt des Messens den Schritt des Messens eines optischen Reflexionsspektrums des nicht gebrochenen Gitters umfasst und der Schritt des Erfassens einer resultierenden Änderung den Schritt des Messens eines optischen Reflexionsspektrums des ersten Abschnitts umfasst.

**4.** Verfahren nach Anspruch 3, ferner umfassend den Schritt des Messens eines optischen Reflexionsspektrums des zweiten Abschnitts.

**5.** Verfahren nach Anspruch 3 oder Anspruch 4, wobei der Schritt des Erfassens einer resultierenden Änderung den Schritt des Vergleichens jeweiliger maximaler Intensitäten und/oder Breiten der optischen Reflexionsspektren umfasst.

**6.** Verfahren nach irgendeinem der Ansprüche 3 bis 5, wobei der Schritt des Bestimmens der Position des Bruchs den Schritt des Vergleichens jeweiliger maximaler Intensitäten und/oder Breiten der optischen Reflexionsspektren umfasst.

**7.** Verfahren nach Anspruch 5 oder Anspruch 6, wobei das Bragg-Gitter (1) einen im Wesentlichen gleichmäßigen effektiven Abstand aufweist und der oder die Schritte des Vergleichens jeweils den Schritt des Vergleichens maximaler Intensitäten ($I_0$) und/oder Breiten jeweiliger Mittelpeaks der optischen Reflexionsspektren umfassen.

**8.** Verfahren nach Anspruch 5 oder Anspruch 6, wobei das Bragg-Gitter (1) gechirpt ist und der oder die Schritte des Vergleichens jeweils den Schritt des Vergleichens jeweiliger Bandbreiten der optischen Reflexionsspektren umfassen.

**9.** Verfahren nach Anspruch 3 oder Anspruch 4, ferner umfassend die Schritte des Bestimmens mindestens eines Parameters des nicht gebrochenen und des gebrochenen Gitters mittels der Reflexionsspektren unter Verwendung von Analysemethoden, wobei der mindestens eine Parameter die Gitterlänge und/oder die Anzahl reflektierender Ebenen umfasst,
wobei der Schritt des Erfassens des Auftretens des Bruchs den Schritt des Vergleichens des oder der bestimmten Parameter umfasst.

10. Verfahren nach Anspruch 9, wobei der Schritt des Bestimmens der Position des Bruchs den Schritt des Vergleichens des oder der bestimmten Parameter umfasst.

11. Verfahren nach irgendeinem vorangehenden Anspruch, wobei der Schritt des Messens einer Reflexions- und/oder Transmissionseigenschaft die Schritte des Bereitstellens von Licht einer Breitbandquelle zu dem Bragg-Gitter und des Erfassens eines Reflexions- oder Transmissionsspektrums mit einem optischen Spektrumanalysator umfasst.

12. Verfahren nach Anspruch 11, wobei der Schritt des Erfassens der resultierenden Änderung die Schritte des Verwendens der Breitbandquelle und des optischen Spektrumanalysators zum Messen eines Reflexions- oder Transmissionsspektrums des gebrochenen Gitters umfasst.

13. Verfahren nach irgendeinem der Ansprüche 1 bis 10, wobei der Schritt des Messens einer Reflexions- und/oder Transmissionseigenschaft folgende Schritte umfasst:

Bereitstellen von Licht eines abstimmbaren Lasers zu dem Bragg-Gitter (1); Steuern des Lasers derart, dass er die Wellenlänge des bereitgestellten Lichts über einen Bereich abtastet;
Erfassen des vom nicht gebrochenen Gitter reflektierten oder transmittierten Lichts mit einem Breitbanddetektor.

14. Verfahren nach Anspruch 13, wobei der Schritt des Erfassens der resultierenden Änderung die Schritte des Verwendens des abstimmbaren Lasers und des Breitbanddetektors zum Messen eines Reflexions- oder Transmissionsspektrums des gebrochenen Gitters umfasst.

15. Verfahren nach irgendeinem vorangehenden Anspruch, wobei das Bragg-Gitter (1) ein Faser-Bragg-Gitter ist.

16. Verfahren nach Anspruch 15, ferner umfassend den Schritt des Beschichtens des Faser-Bragg-Gitters zum Verbessern der Übertragung des Risses oder der Bruchstelle zu dem Gitter.

17. Verfahren nach Anspruch 15 oder Anspruch 16, ferner umfassend den Schritt des Versprödens des Faser-Bragg-Gitters.

18. Vorrichtung zum Erfassen eines Risses (C) oder einer Bruchstelle in einem Körper (B), wobei die Anordnung Folgendes umfasst:

ein Bragg-Gitter (1) zum Anbringen an einer Oberfläche des Körpers (B) oder zum Einbetten im Körper (B);
eine Lichtquelle und einen Lichtdetektor zum Messen eines Reflexions- und/oder Transmissionsspektrums des Bragg-Gitters (1);
**gekennzeichnet durch**
einen Prozessor (5), der derart angeordnet ist, dass er einen Bruch entlang der Länge des Bragg-Gitter-Reflektors **durch** Erfassen einer Änderung des Reflexions- und/oder Transmissionsspektrums erfasst.

19. Vorrichtung nach Anspruch 18, wobei der Prozessor (5) ferner derart angeordnet ist, dass er die Position des Bruchs entlang der Länge des Bragg-Gitters mittels Messungen der Reflexions- und/oder Transmissionsspektren vor und nach dem Bruch bestimmt.

20. Vorrichtung nach Anspruch 18 oder Anspruch 19, wobei die Lichtquelle eine Breitbandquelle umfasst und der Detektor einen optischen Spektrumanalysator umfasst.

21. Vorrichtung nach Anspruch 18 oder Anspruch 19, wobei die Lichtquelle einen abstimmbaren Laser umfasst und der Detektor einen Breitbanddetektor umfasst.

22. Vorrichtung nach irgendeinem der Ansprüche 18 bis 21, wobei das Bragg-Gitter ein Faser-Bragg-Gitter ist.

23. Vorrichtung nach Anspruch 22, wobei das Faser-Bragg-Gitter beschichtet ist, um die Haftung am Körper zu erleichtern.

24. Vorrichtung nach Anspruch 22 oder Anspruch 23, wobei das Faser-Bragg-Gitter versprödet ist.

## Revendications

1. Procédé de détection d'une fissure ou d'une fracture dans un corps, la procédure comprenant les étapes suivantes : apposition ou implantation d'un réseau de Bragg (1) respectivement à la surface du ou dans le corps (B) ; mesure d'une caractéristique de réflexion et/ou de transmission du réseau de Bragg (1) ; **caractérisée par** la transmission d'une fissure (C) ou d'une fracture dans le corps (B) au réseau de Bragg (1) afin de rompre le réseau de Bragg (1) en une première partie et en une seconde partie ; et détection de la survenue de la rupture du réseau de Bragg (1) en détectant une modification résultante dans la caractéristique de réflexion et/ou de transmission du réseau de Bragg (1).

2. Procédé selon la revendication 1, comprenant en outre l'étape de déterminer au départ de ladite modification résultante la position de la rupture du réseau de Bragg (1) sur sa longueur.

3. Procédé selon la revendication 1 ou la revendication 2 dans laquelle ladite étape de mesure comprend l'étape de mesure d'un spectre de réflexion optique du réseau intact et ladite étape de détection d'une modification résultante comprend l'étape de mesure d'un spectre de réflexion optique de la première partie.

4. Procédé selon la revendication 3 comprenant en outre l'étape de mesure d'un spectre de réflexion optique de la seconde partie.

5. Procédé selon la revendication 3 ou la revendication 4, dans laquelle ladite étape de détection d'une modification résultante comprend l'étape de comparaison des maxima respectifs des intensités et/ou des largeurs des spectres de réflexion optiques.

6. Procédé selon l'une quelconque des revendications 3 à 5, dans laquelle l'étape de détermination de la position de la rupture comprend l'étape de comparaison des maxima respectifs des intensités et/ou des largeurs des spectres de réflexion optiques.

7. Procédé selon la revendication 5 ou la revendication 6, dans laquelle le réseau de Bragg (1) a un pas effectif sensiblement uniforme et l'étape ou les étapes de comparaison comprennent chacune l'étape de comparaison des maxima d'intensités ($I_0$) et/ou des largueurs des maxima centraux des spectres de réflexion optiques.

8. Procédé selon la revendication 5 ou la revendication 6, dans laquelle le réseau de Bragg (1) est à fréquence pulsée et l'étape ou les étapes de comparaison comprennent chacune l'étape de comparaison des largeurs de bande respectives des spectres de réflexion optiques.

9. Procédé selon la revendication 3 ou la revendication 4 comprenant en outre les étapes de détermination au départ des spectres de réflexion, à l'aide de techniques analytiques, d'au moins un paramètre du réseau intact et rompu, l'au moins un paramètre incluant la longueur du réseau et/ou le nombre de plans réfléchissants, dans laquelle l'étape de détection de la survenue de la rupture comprend l'étape de comparaison dudit ou desdits paramètre(s) déterminé (s).

10. Procédé selon la revendication 9 dans laquelle ladite étape de détermination de la position de la rupture comprend l'étape de comparaison dudit ou desdits paramètre(s) déterminé(s).

11. Procédé selon l'une quelconque des revendications précédentes, dans laquelle ladite étape de mesure d'une caractéristique de réflexion et/ou de transmission comprend les étapes de fourniture de lumière au réseau Bragg au départ d'une source à large bande et de détection d'un spectre de réflexion ou de transmission à l'aide d'un analyseur de spectre optique.

12. Procédé selon la revendication 11, dans laquelle l'étape de détection de la modification résultante comprend les étapes d'utilisation de la source à large bande et de l'analyseur de spectre optique afin de mesurer un spectre de réflexion ou de transmission du réseau rompu.

13. Procédé selon l'une quelconque des revendications 1 à 10, dans laquelle l'étape de mesure d'une caractéristique de réflexion et/ou de transmission comprend les étapes suivantes : fourniture de lumière au réseau Bragg (1) au départ d'un laser accordable ; contrôle du laser afin de balayer la longueur d'onde de la lumière fournie sur une gamme ; détection de la lumière réfléchie ou transmise par le réseau intact à l'aide d'un détecteur à large bande.

14. Procédé selon la revendication 13, dans laquelle l'étape de détection de la modification résultante comprend les étapes d'utilisation du laser accordable et du détecteur à large bande afin de mesurer un spectre de réflexion ou de transmission du réseau rompu.

15. Procédé selon l'une quelconque des revendications précédentes, dans laquelle le réseau de Bragg (1) est un réseau de Bragg à fibre.

16. Procédé selon la revendication 15 comprenant en outre l'étape de revêtir le réseau de Bragg à fibre afin d'améliorer la transmission de la fissure ou de la fracture au réseau.

17. Procédé selon la revendication 15 ou la revendication 16, comprenant en outre l'étape de fragilisation du réseau de Bragg à fibre.

18. Appareil de détection d'une fissure (C) ou d'une fracture dans un corps (B), l'appareil comprenant : un réseau de Bragg (1) à apposer sur une surface du ou à implanter dans le corps (B) ; une source de lumière et un détecteur de lumière pour la mesure d'un spectre de réflexion et/ou de transmission du réseau de Bragg (1) ; **caractérisé par** un processeur (5) réglé afin de détecter une rupture sur la longueur du réflecteur du réseau de Bragg en détectant un changement dans le spectre de réflexion et/ou de transmission.

19. Appareil selon la revendication 18 dans lequel le processeur (5) est en outre réglé afin de déterminer la position de la rupture sur la longueur du réseau de Bragg au départ de mesures des spectres de réflexion et/ou de transmission avant et après la rupture.

20. Appareil selon la revendication 18 ou la revendication 19 dans lequel la source de lumière comprend une source à large bande et le détecteur comprend un analyseur de spectre optique.

21. Appareil selon la revendication 18 ou la revendication 19 dans lequel la source de lumière comprend un laser accordable et le détecteur comprend un détecteur à large bande.

22. Appareil selon l'une quelconque des revendications 18 à 21, dans lequel le réseau de Bragg est un réseau de Bragg à fibre.

23. Appareil selon la revendication 22 dans lequel le réseau de Bragg à fibre est revêtu afin de faciliter l'adhérence au corps.

24. Appareil selon la revendication 22 ou la revendication 23, dans lequel le réseau de Bragg à fibre est fragilisé.

FIG. 1.

FIG. 2.

BEFORE CRACK

FIG. 3.

AFTER CRACK

FIG. 4.

## FIG. 6.

## FIG. 7.

FIG.8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5723857 A

### Non-patent literature cited in the description

- **Yun-Yiang Rao.** In-Fibre Bragg grating sensors. *Meas. Sci. Technol.,* 1997, vol. 8, 355-375

- **J. Skaar ; K.M. Risvik.** A Genetic Algorithm for the Inverse Problem in Synthesis of Fiber Gratings. *Journal of Lightwave Technology,* October 1988, vol. 16 (10), 1928-1932